# EUROPEAN PATENT SPECIFICATION

(11) **EP 3 000 043 B1**
(45) Date of publication and mention of the grant of the patent: **09.12.2020**
(21) Application number: 14800620.8
(22) Date of filing: 11.04.2014
(51) Int. Cl.: A63F 13/355, G06F 11/36, A63F 13/52, A63F 13/497

(54) **INFORMATION PROCESSING APPARATUS, METHOD OF CONTROLLING THE SAME AND PROGRAM**
INFORMATIONSVERARBEITUNGSVORRICHTUNG, VERFAHREN ZUR STEUERUNG DAVON UND PROGRAMM
APPAREIL DE TRAITEMENT D'INFORMATIONS, SON PROCÉDÉ DE COMMANDE ET PROGRAMME

(30) Priority: 21.05.2013 US 201361825663 P
(43) Date of publication of application: 30.03.2016
(73) Proprietor: Square Enix Holdings Co., Ltd., Tokyo 160-8430 (JP)
(72) Inventor: PERRIN, Cyril, Antony 92160 (FR)
(74) Representative: Pitchford, James Edward
(86) International application number: PCT/JP2014/060990
(87) International publication number: WO 2014/188829

(56) References cited:
- WO-A1-2009/073798
- WO-A2-2008/082610
- US-A1- 2003 072 023
- US-A1- 2003 072 023
- US-A1- 2009 002 744
- US-A1- 2010 030 849
- US-A1- 2012 063 801

## Description

### TECHNICAL FIELD

The present invention relates to an information processing apparatuses, a method of controlling the same and a program for testing a system which receives inputs and renders images according to the inputs.

### BACKGROUND ART

The video game industry has seen considerable evolution, from the introduction of stand-alone arcade games, to home-based computer games, to the emergence of games made for specialized consoles. Widespread public access to the Internet then led to another major development, namely "cloud gaming". In a cloud gaming system, a player can utilize an ordinary Internet-enabled appliance such as a smartphone or tablet to connect to a video game server over the Internet. The video game server starts a session for the player, and may do so for multiple players. The video game server renders video data and generates audio for the player based on player actions (e.g., moves, selections) and other attributes of the game. Encoded video and audio is delivered to the player's device over the Internet, and is reproduced as visible images and audible sounds. In this way, players from anywhere in the world can play a video game without the use of specialized video game consoles, computationally intensive software or dedicated graphics processing hardware.

Traditionally, a video game is tested by having a human tester play the game. During game play, the tester applies inputs to move his avatar / character and perform other actions (e.g., shoot, throw, kick, etc.). Sometimes the game has to be tested several times in succession to reveal subtle problems or bugs in the code. However, when attempting to replay the game, the tester is unlikely to be able to provide exactly the same inputs at exactly the same points in the game. This can make testing inconsistent, lengthy and costly, and is especially true for a multi-player game, where the actions of many players may need to be coordinated. Although the test inputs can be recorded as a function of time and subsequently re-applied, such methods may be often imprecise and eventually the inputs may end up being out of phase with the in-game occurrences obtained when the test inputs were initially recorded. Similar problems may occur in testing a system, which receives inputs from one or more client devices and renders images according to the received inputs, such as a 3-dimensional CAD system or an image (effect) editor system.

Background art is provided in US 2003/072023 A1 and WO 2009/073798 A1.

US 2003/072023 A1 discloses a key operation monitoring method for monitoring a key operation input from an operation panel in an image forming apparatus, the key operation monitoring method including the steps of: obtaining the key operation as key event information; and receiving the obtained key event information by interprocess communication.

WO 2009/073798 A1 discloses a system for collaborative conferencing using streaming interactive video, which includes an apparatus comprising: a server that generates a stream of streaming interactive video and/or audio; means for multicasting the stream to a plurality of client devices accommodating different device video, audio and/or network characteristics; and means for allowing input from one or more of the client devices to control the streaming interactive video.

### SUMMARY OF INVENTION

The present invention is a testing unit as defined in Claim 1 of the appended claims.

According to one aspect of the present disclosure, there is provided an information processing apparatus, comprising: providing means for providing a system, which receives inputs and renders one or more images according to the inputs, with an input set including one or more inputs retrieved from storage means for storing input sets and first values, wherein each of the first values corresponds to one of first outputs, and wherein each of the first outputs was obtained by each of the stored input sets being previously provided to the system; obtaining means for obtaining a second output from the system by the providing means providing the input set to the system, and obtaining a second value corresponding to the second output; checking means for checking whether the second value matches one of the first values; and outputting means for explicitly or implicitly outputting a result of the check; wherein the providing means provides the system with one of the stored input sets corresponding to one of the first values, which matches the second value.

Further features of the present disclosure will become apparent from the following description of exemplary embodiments with reference to the attached drawings.

### BRIEF DESCRIPTION OF DRAWINGS

Fig. 1A is a block diagram of a cloud-based video game system architecture including a server system, according to a non-limiting embodiment of the present invention.
Fig. 1B is a block diagram of the cloud-based video game system architecture of Fig. 1A, showing interaction with the set of client devices over the data network during game play, according to a non-limiting embodiment of the present invention.
Fig. 2A is a block diagram showing various physical components of the architecture of Fig. 1, according to a non-limiting embodiment of the present invention.
Fig. 2B is a variant of Fig. 2A.
Fig. 2C is a block diagram showing various modules of the server system in the architecture of Fig. 1, which can be implemented by the physical components of Figs. 2A or 2B and which may be operational during game play.
Figs. 3A to 3C are flowcharts showing execution of a set of video game processes carried out by a rendering command generator, in accordance with non-limiting embodiments of the present invention.
Figs. 4A and 4B are flowcharts showing operation of a client device to process received video and audio, respectively, in accordance with non-limiting embodiments of the present invention.
Fig. 5 is a block diagram showing a testing unit and depicting operation thereof during a learning phase, in accordance with a non-limiting embodiment of the present invention.
Fig. 6 is a flowchart showing actions of the testing unit during the learning phase, in accordance with a non-limiting embodiment of the present invention.
Fig. 7 is a block diagram showing the testing unit and depicting operation thereof during a testing phase, in accordance with a non-limiting embodiment of the present invention.
Fig. 8 is a flowchart showing actions of the testing unit during the testing phase, in accordance with a non-limiting embodiment of the present invention.
Fig. 9 shows a client device in accordance with a non-limiting embodiment of the present invention.
Fig. 10 is a block diagram showing an alternative embodiment of the testing unit and depicting operation thereof during the learning phase, in accordance with a non-limiting embodiment of the present invention.

### DESCRIPTION OF EMBODIMENTS

In the following, a method for testing a cloud-based video game system will be described in detail with reference to the attached drawings. However, the scope of the present invention is not limited to such a game testing and includes testing another system which is executed by a server on a network and which receives inputs from one or more client devices and renders images according to the received inputs, such as a 3-dimensional CAD system, an image (effect) editor system, or the like.

### I. Cloud Gaming Architecture

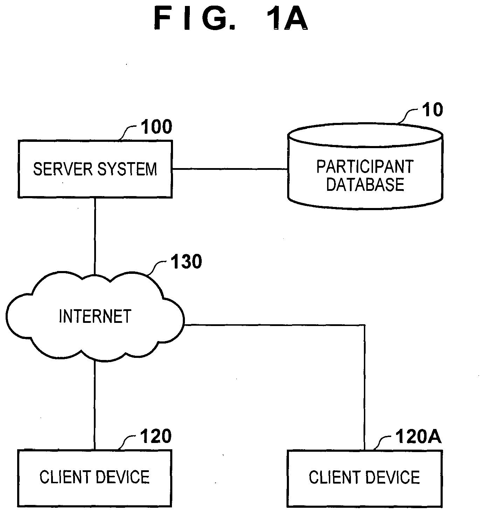

Fig. 1A schematically shows a cloud-based video game system architecture according to a non-limiting embodiment of the present invention. The architecture may include client devices 120, 120A connected to an information processing apparatus, such as a server system 100, over a data network such as the Internet 130. Although only two client devices 120, 120A are shown, it should be appreciated that the number of client devices in the cloud-based video game system architecture is not particularly limited.

The configuration of the client devices 120, 120A is not particularly limited. In some embodiments, one or more of the client devices 120, 120A may be embodied in a personal computer (PC), a home game machine (console), a portable game machine, a smart television, a set-top box (STB), etc. In other embodiments, one or more of the client devices 120, 120A may be a communication or computing device such as a mobile phone, a personal digital assistant (PDA), or a tablet.

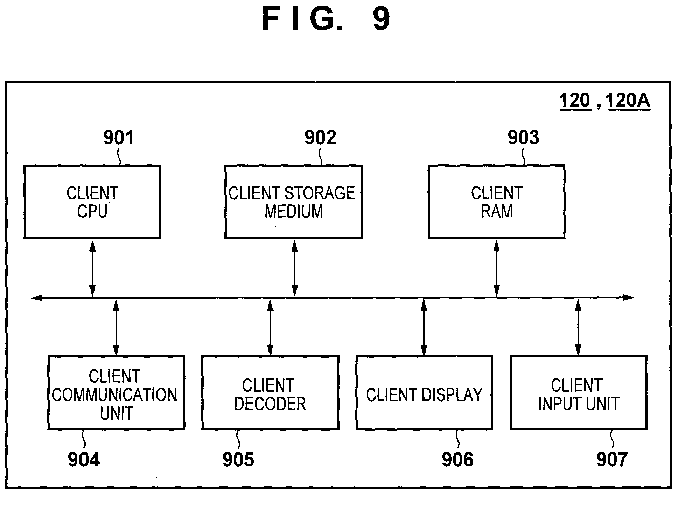

Fig. 9 shows a general configuration of a client device 102, 102A in accordance with a non-limiting embodiment of the present invention. A client CPU 901 may control operation of blocks / modules comprised in the client device 102, 102A. The client CPU 901 may control operation of the blocks by reading out operation programs for the blocks stored in a client storage medium 902, loading them into a client RAM 903 and executing them. The client storage medium 902 may be an HDD, a non-volatile ROM, or the like. Also, operation programs may be dedicated applications, browsing applications or the like. In addition to being a program loading area, the client RAM 903 may also be used as a storage area for temporarily storing such things as intermediate data output in the operation of any of the blocks.

A client communication unit 904 may be a communication interface comprised in the client device 102, 102A. In an embodiment, the client communication unit 904 may receive encoded screen data of the provided service from the server system 100 via the Internet 130. Also, in the reverse direction of communication, the client communication unit 904 may transmit information regarding operation inputs made by the user of the client device 102, 102A via the Internet 130 to the server system 100. The client decoder 905 may decode encoded screen data received by the client communication unit 904 and generate screen data. The generated screen data is presented to the user of the client device by being output to a client display 906 and displayed. Note that it is not necessary that the client device have the client display 906, and the client display 906 may be an external display apparatus connected to the client device.

**The** client input unit 907 may be a user interface comprised in the client device. The client input unit 907 may include input devices (such as a touch screen, a keyboard, a game controller, a joystick, etc.), and detect an operation input by the user. For the detected operation input, integrated data may be transmitted via the client communication unit 904 to the server system 100, and may be transmitted as information indicating that a particular operation input was performed after analyzing the operation content. Also, the client input unit 907 may include other sensors (e.g., Kinect™) that may include a camera or the like, that detect as an operation input a motion of a particular object, or a body motion made by the user. In addition, each of the client devices 102, 102A may include a loudspeaker for outputting audio.

Each of the client devices 120, 120A may connect to the Internet 130 in any suitable manner, including over a respective local access network (not shown). The server system 100 may also connect to the Internet 130 over a local access network (not shown), although the server system 100 may connect directly to the Internet 130 without the intermediary of a local access network. Connections between the cloud gaming server system 100 and one or more of the client devices 120, 120A may comprise one or more channels. These channels can be made up of physical and/or logical links, and may travel over a variety of physical media, including radio frequency, fiber optic, free-space optical, coaxial and twisted pair. The channels may abide by a protocol such as UDP or TCP/IP. Also, one or more of the channels may be supported by a virtual private network (VPN). In some embodiments, one or more of the connections may be session-based.

The server system 100 may enable users of the client devices 120, 120A to play video games, either individually (i.e., a single-player video game) or in groups (i.e., a multi-player video game). The server system 100 may also enable users of the client devices 120, 120A to spectate games being played by other players. Non-limiting examples of video games may include games that are played for leisure, education and/or sport. A video game may but need not offer participants the possibility of monetary gain.

The server system 100 may also enable users of the client devices 120, 120A to test video games and/or administer the server system 100.

**The** server system 100 may include one or more computing resources, possibly including one or more game servers, and may comprise or have access to one or more databases, possibly including a participant database 10. The participant database 10 may store account information about various participants and client devices 120, 120A, such as identification data, financial data, location data, demographic data, connection data and the like. The game server(s) may be embodied in common hardware or they may be different servers that are connected via a communication link, including possibly over the Internet 130. Similarly, the database(s) may be embodied within the server system 100 or they may be connected thereto via a communication link, possibly over the Internet 130.

The server system 100 may implement an administrative application for handling interaction with client devices 120, 120A outside the game environment, such as prior to game play. For example, the administrative application may be configured for registering a user of one of the client devices 120, 120A in a user class (such as a "player", "spectator", "administrator" or "tester"), tracking the user's connectivity over the Internet, and responding to the user's command(s) to launch, join, exit or terminate an instance of a game, among several non-limiting functions. To this end, the administrative application may need to access the participant database 10.

**The** administrative application may interact differently with users in different user classes, which may include "player", "spectator", "administrator" and "tester", to name a few non-limiting possibilities. Thus, for example, the administrative application may interface with a player (i.e., a user in the "player" user class) to allow the player to set up an account in the participant database 10 and select a video game to play. Pursuant to this selection, the administrative application may invoke a server-side video game application. The server-side video game application may be defined by computer-readable instructions that execute a set of modules for the player, allowing the player to control a character, avatar, race car, cockpit, etc. within a virtual world of a video game. In the case of a multi-player video game, the virtual world may be shared by two or more players, and one player's game play may affect that of another. In another example, the administrative application may interface with a spectator (i.e., a user in the "spectator" user class) to allow the spectator to set up an account in the participant database 10 and select a video game from a list of ongoing video games that the user may wish to spectate. Pursuant to this selection, the administrative application may invoke a set of modules for that spectator, allowing the spectator to observe game play of other users but not to control active characters in the game. (Unless otherwise indicated, where the term "participant" is used, it is meant to apply equally to both the "player" user class and the "spectator" user class.)
In a further example, the administrative application may interface with an administrator (i.e., a user in the "administrator" user class) to allow the administrator to change various features of the game server application, perform updates and manage player/spectator accounts.

In yet another example, the game server application may interface with a tester (i.e., a user in the "tester" user class) to allow the tester to select a video game to test. Pursuant to this selection, the game server application may invoke a set of modules for the tester, allowing the tester to test the video game.

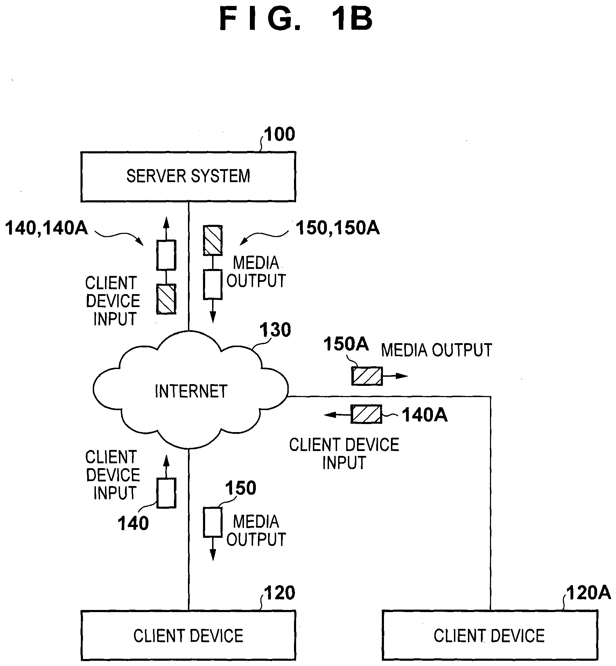

Fig. 1B illustrates interaction that may take place between client devices 120, 120A and the server system 100 during game play, for users in the "player" or "spectator" user class.

In some non-limiting embodiments, the server-side video game application may cooperate with a client-side video game application, which can be defined by a set of computer-readable instructions executing on a client device, such as client device 120, 120A. Use of a client-side video game application may provide a customized interface for the participant to play or spectate the game and access game features. In other non-limiting embodiments, the client device does not feature a client-side video game application that is directly executable by the client device. Rather, a web browser may be used as the interface from the client device's perspective. The web browser may itself instantiate a client-side video game application within its own software environment so as to optimize interaction with the server-side video game application.

The client-side video game application running (either independently or within a browser) on the given client device may translate received user inputs and detected user movements into "client device inputs", which may be sent to the cloud gaming server system 100 over the Internet 130.

In the illustrated embodiment of Fig. 1B, client device 120 may produce a client device input 140, while client device 120A may produce a client device input 140A. The server system 100 may process the client device inputs 140, 140A received from the various client devices 120, 120A and may generate respective "media output" 150, 150A for the various client devices 120, 120A. The media output 150, 150A may include a stream of encoded video data (representing images when displayed on a screen) and audio data (representing sound when played via a loudspeaker). The media output 150, 150A may be sent over the Internet 130 in the form of packets. Packets destined for a particular one of the client devices 120, 120A may be addressed in such a way as to be routed to that device over the Internet 130. Each of the client devices 120, 120A may include circuitry for buffering and processing the media output in the packets received from the cloud gaming server system 100, as well as a display for displaying images and a transducer (e.g., a loudspeaker) for outputting audio. Additional output devices may also be provided, such as an electro-mechanical system to induce motion.

It should be appreciated that a stream of video data can be divided into "frames". The term "frame" as used herein does not require the existence of a one-to-one correspondence between frames of video data and images represented by the video data. That is to say, while it is possible for a frame of video data to contain data representing a respective displayed image in its entirety, it is also possible for a frame of video data to contain data representing only part of an image, and for the image to in fact require two or more frames in order to be properly reconstructed and displayed. By the same token, a frame of video data may contain data representing more than one complete image, such that N images may be represented using M frames of video data, where M<N.

### II. Cloud Gaming Server System 100 (Distributed Architecture)

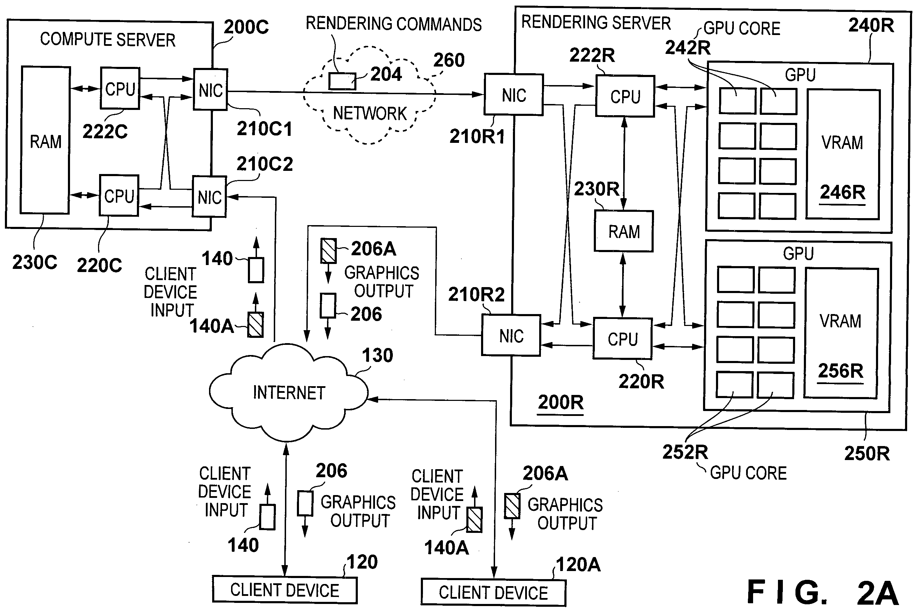

Fig. 2A shows one possible non-limiting physical arrangement of components for the cloud gaming server system 100. In this embodiment, individual servers within the cloud gaming server system 100 may be configured to carry out specialized functions. For example, a compute server 200C may be primarily responsible for tracking state changes in a video game based on a user input, while a rendering server 200R may be primarily responsible for rendering graphics (video data).

For the purposes of the presently described example embodiment, both client device 120 and client device 120A are assumed to be participating in the video game, either as players or spectators. However, it should be understood that in some cases there may be a single player and no spectator, while in other cases there may be multiple players and a single spectator, in still other cases there may be a single player and multiple spectators and in yet other cases there may be multiple players and multiple spectators.

For the sake of simplicity, the following description refers to a single compute server 200C connected to a single rendering server 200R. However, it should be appreciated that there may be more than one rendering server 200R connected to the same compute server 200C, or more than one compute server 200C connected to the same rendering server 200R. In the case where there are multiple rendering servers 200R, these may be distributed over any suitable geographic area.

As shown in the non-limiting physical arrangement of components in Fig. 2A, the compute server 200C may comprise one or more central processing units (CPUs) 220C, 222C and a random access memory (RAM) 230C. The CPUs 220C, 222C can have access to the RAM 230C over a communication bus architecture, for example. While only two CPUs 220C, 222C are shown, it should be appreciated that a greater number of CPUs, or only a single CPU, may be provided in some example implementations of the compute server 200C. The compute server 200C may also comprise a receiver for receiving a client device input, which is received over the Internet 130 from each of the client devices participating in the video game. In the presently described example embodiment, both client device 120 and client device 120A are assumed to be participating in the video game, and therefore the received client device input may include a client device input 140 and a client device input 140A. In a non-limiting embodiment, the receiver may be implemented by a network interface component (NIC) 210C2.

**The** compute server 200C may further comprise a transmitter for outputting sets of rendering commands 204. The sets of rendering commands 204 output from the compute server 200C may be sent to the rendering server 200R. In a non-limiting embodiment, the transmitter may be embodied at least in part by a network interface component (NIC) 210C1. In one embodiment, the compute server 200C may be connected directly to the rendering server 200R. In another embodiment, the compute server 200C may be connected to the rendering server 200R over a network 260, which may be the Internet 130 or another network. A virtual private network (VPN) may be established between the compute server 200C and the rendering server 200R over the network 260.

At the rendering server 200R, the sets of rendering commands 204 sent by the compute server 200C may be received at a receiver (which may be implemented by a network interface component (NIC) 210R1) and may be directed to one or more CPUs 220R, 222R. The CPUs 220R, 222R may be connected to graphics processing units (GPUs) 240R, 250R. By way of non-limiting example, GPU 240R may include a set of GPU cores 242R and a video random access memory (VRAM) 246R. Similarly, GPU 250R may include a set of GPU cores 252R and a video random access memory (VRAM) 256R. Each of the CPUs 220R, 222R may be connected to each of the GPUs 240R, 250R or to a subset of the GPUs 240R, 250R. Communication between the CPUs 220R, 222R and the GPUs 240R, 250R can be established using, for example, a communication bus architecture. Although only two CPUs and two GPUs are shown, there may be more than two CPUs and GPUs, or even just a single CPU or GPU, in a specific example of implementation of the rendering server 200R.

The CPUs 220R, 222R may cooperate with the GPUs 240R, 250R to convert the sets of rendering commands 204 into a graphics output streams, one for each of the participating client devices. In the present embodiment, there may be two graphics output streams 206, 206A for the client devices 120, 120A, respectively. This will be described in further detail later on. The rendering server 200R may comprise a further transmitter (which may be implemented by a network interface component (NIC) 210R2), through which the graphics output streams 206, 206A may be sent to the client devices 120, 120A, respectively.

### III. Cloud Gaming Server System 100 (Hybrid Architecture)

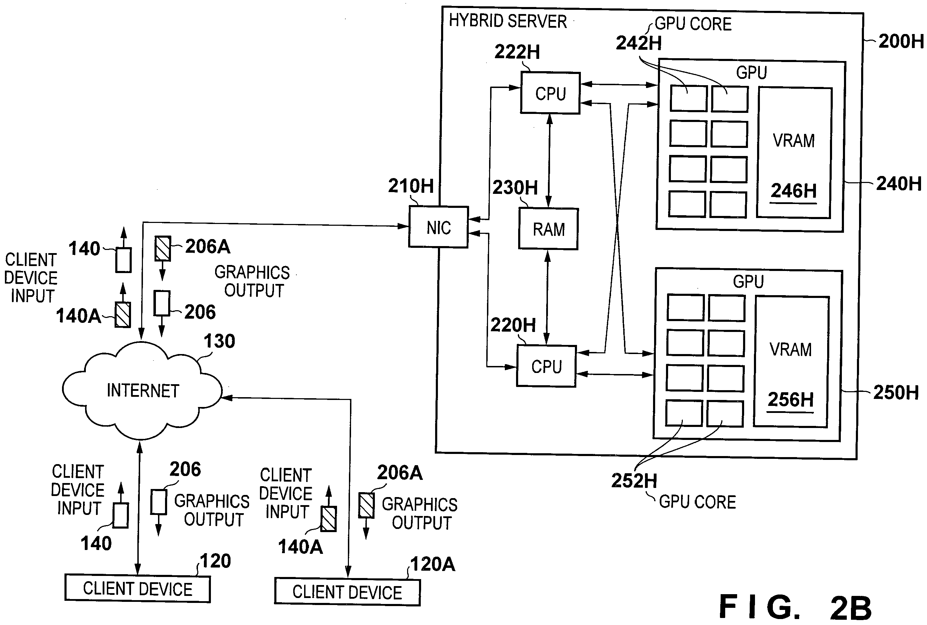

Fig. 2B shows a second possible non-limiting physical arrangement of components for the cloud gaming server system 100. In this embodiment, a hybrid server 200H may be responsible both for tracking state changes in a video game based on a user input, and for rendering graphics (video data).

As shown in the non-limiting physical arrangement of components in Fig. 2B, the hybrid server 200H may comprise one or more central processing units (CPUs) 220H, 222H and a random access memory (RAM) 230H. The CPUs 220H, 222H may have access to the RAM 230H over a communication bus architecture, for example. While only two CPUs 220H, 222H are shown, it should be appreciated that a greater number of CPUs, or only a single CPU, may be provided in some example implementations of the hybrid server 200H. The hybrid server 200H may also comprise a receiver for receiving network interface component (NIC) 210H, where a client device input is received over the Internet 130 from each of the client devices participating in the video game. In the presently described example embodiment, both client device 120 and client device 120A are assumed to be participating in the video game, and therefore the received client device input may include a client device input 140 and a client device input 140A. In a non-limiting embodiment, the receiver may be implemented by a network interface component (NIC) 210H.

In addition, the CPUs 220H, 222H may be connected to a graphics processing units (GPUs) 240H, 250H. By way of non-limiting example, GPU 240H may include a set of GPU cores 242H and a video random access memory (VRAM) 246H. Similarly, GPU 250H may include a set of GPU cores 252H and a video random access memory (VRAM) 256H. Each of the CPUs 220H, 222H may be connected to each of the GPUs 240H, 250H or to a subset of the GPUs 240H, 250H. Communication between the CPUs 220H, 222H and the GPUs 240H, 250H may be established using, for example, a communication bus architecture. Although only two CPUs and two GPUs are shown, there may be more than two CPUs and GPUs, or even just a single CPU or GPU, in a specific example of implementation of the hybrid server 200H.

The CPUs 220H, 222H may cooperate with the GPUs 240H, 250H to convert the sets of rendering commands 204 into graphics output streams, one for each of the participating client devices. In this embodiment, there may be two graphics output streams 206, 206A for the participating client devices 120, 120A, respectively. The graphics output streams 206, 206A may be sent to the client devices 120, 120A, respectively, via the NIC 210H.

### IV. Cloud Gaming Server System 100

### (Functionality Overview)

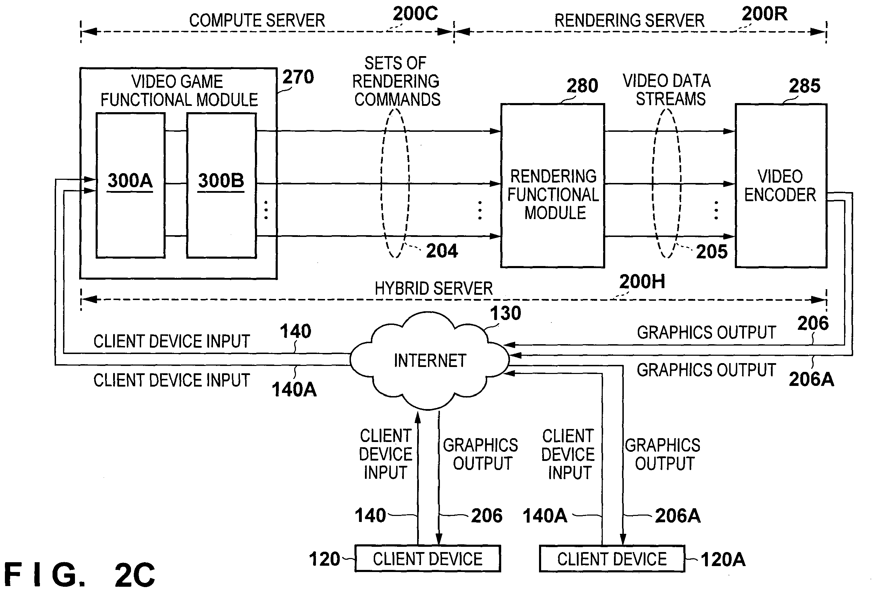

During game play, the server system 100 runs a server-side video game application, which can be composed of a set of modules. With reference to Fig. 2C, these modules may include a rendering command generator (video game functional module/unit) 270, a rendering engine (rendering functional module/unit) 280 and a video encoder 285. These modules may be implemented by the above-described physical components of the compute server 200C and the rendering server 200R (in Fig. 2A) and/or of the hybrid server 200H (in Fig. 2B). For example, according to the non-limiting embodiment of Fig. 2A, the rendering command generator 270 may be implemented by the compute server 200C, while the rendering engine 280 and the video encoder 285 may be implemented by the rendering server 200R. According to the non-limiting embodiment of Fig. 2B, the hybrid server 200H may implement the rendering command generator 270, the rendering engine 280 and the video encoder 285.

The present example embodiment discusses a single rendering command generator 270 for simplicity of illustration. However, it should be noted that in an actual implementation of the cloud gaming server system 100, many rendering command generators similar to the rendering command generator 270 may be executed in parallel. Thus, the cloud gaming server system 100 may support multiple independent instantiations of the same video game, or multiple different video games, simultaneously. Also, it should be noted that the video games can be single-player video games or multi-player games of any type.

The rendering command generator 270 may be implemented by certain physical components of the compute server 200C (in Fig. 2A) or of the hybrid server 200H (in Fig. 2B). Specifically, the rendering command generator 270 may be encoded as computer-readable instructions that are executable by a CPU (such as the CPUs 220C, 222C in the compute server 200C or the CPUs 220H, 222H in the hybrid server 200H). The instructions can be tangibly stored in the RAM 230C (in the compute server 200C) or the RAM 230H (in the hybrid server 200H) or in another memory area, together with constants, variables and/or other data used by the rendering command generator 270. In some embodiments, the rendering command generator 270 may be executed within the environment of a virtual machine that may be supported by an operating system that is also being executed by a CPU (such as the CPUs 220C, 222C in the compute server 200C or the CPUs 220H, 222H in the hybrid server 200H).

The rendering engine 280 may be implemented by certain physical components of the rendering server 200R (in Fig. 2A) or of the hybrid server 200H (in Fig. 2B). In an embodiment, the rendering engine 280 may take up one or more GPUs (240R, 250R in Fig. 2A, 240H, 250H in Fig. 2B) and may or may not utilize CPU resources.

The video encoder 285 may be implemented by certain physical components of the rendering server 200R (in Fig. 2A) or of the hybrid server 200H (in Fig. 2B). Those skilled in the art will appreciate that there are various ways to implement the video encoder 285. In the embodiment of Fig. 2A, the video encoder 285 may be implemented by the CPUs 220R, 222R and/or by the GPUs 240R, 250R. In the embodiment of Fig. 2B, the video encoder 285 may be implemented by the CPUs 220H, 222H and/or by the GPUs 240H, 250H. In yet another embodiment, the video encoder 285 may be implemented by a separate encoder chip (not shown).

In operation, the rendering command generator 270 may produce the sets of rendering commands 204, based on received client device inputs. Each of the received client device inputs may carry data (e.g., an address) identifying the rendering command generator for which it is destined, as well as data identifying the user and/or client device from which it originates. Since the users of the client devices 120, 120A are participants in the video game (i.e., players or spectators), the received client device inputs may include the client device inputs 140, 140A received from the client devices 120, 120A.

Rendering commands refer to commands which may be used to instruct a specialized graphics processing unit (GPU) to produce a frame of video data or a sequence of frames of video data. Referring to Fig. 2C, the sets of rendering commands 204 result in the production of frames of video data by the rendering engine 280. The images represented by these frames may change as a function of responses to the client device input 140, 140A that are programmed into the rendering command generator 270. For example, the rendering command generator 270 may be programmed in such a way as to respond to certain specific stimuli to provide the user with an experience of progression (with future interaction being made different, more challenging or more exciting), while the response to certain other specific stimuli will provide the user with an experience of regression or termination. Although the instructions for the rendering command generator 270 may be fixed in the form of a binary executable file, the client device input 140, 140A is unknown until the moment of interaction with a player who uses the corresponding client device 120, 120A. As a result, there can be a wide variety of possible outcomes, depending on the specific client device input that is provided. This interaction between players/spectators and the rendering command generator 270 via the client devices 120, 120A can be referred to as "game play" or "playing a video game".

The rendering engine 280 may process the sets of rendering commands 204 to create multiple video data streams 205. Generally, there may be one video data stream per participant (or, equivalently, per client device). When performing rendering, data for one or more objects represented in three-dimensional space (e.g., physical objects) or two-dimensional space (e.g., text) may be loaded into a cache memory (not shown) of a particular GPU 240R, 250R, 240H, 250H. This data may be transformed by the GPU 240R, 250R, 240H, 250H into data representative of a two-dimensional image, which may be stored in the appropriate VRAM 246R, 256R, 246H, 256H. As such, the VRAM 246R, 256R, 246H, 256H may provide temporary storage of picture element (pixel) values for a game screen.

The video encoder 285 may compress and encodes the video data in each of the video data streams 205 into a corresponding stream of compressed / encoded video data. The resultant streams of compressed / encoded video data, referred to as graphics output streams, may be produced on a per-client-device basis. In the present example embodiment, the video encoder 285 may produce a graphics output stream 206 for client device 120 and a graphics output stream 206A for client device 120A. Additional modules may be provided for formatting the video data into packets so that they can be transmitted over the Internet 130. The video data in the video data streams 205 and the compressed / encoded video data within a given graphics output stream may be divided into frames.

### V. Generation of Rendering Commands

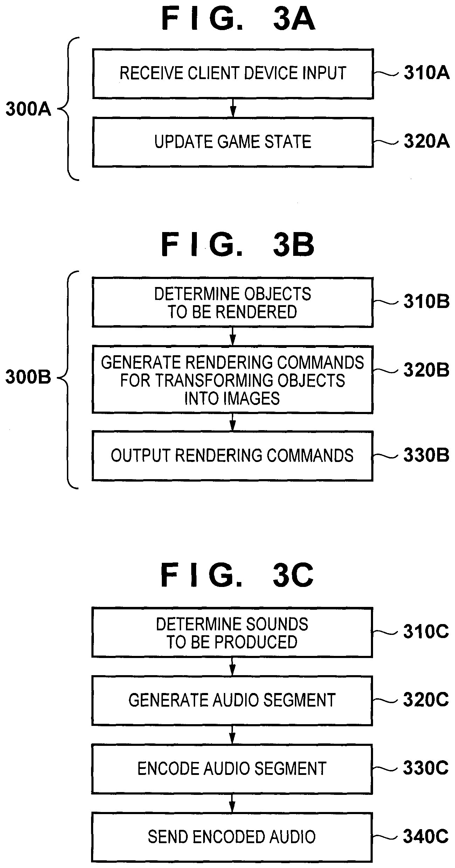

Generation of rendering commands by the rendering command generator 270 is now described in greater detail with reference to Figs. 2C, 3A and 3B. Specifically, execution of the rendering command generator 270 may involve several processes, including a main game process 300A and a graphics control process 300B, which are described herein below in greater detail.

### Main Game Process

The main game process 300A is described with reference to Fig. 3A. The main game process 300A may be executed repeatedly as a continuous loop. As part of the main game process 300A, there may be provided an action 310A, during which one or more client device inputs may be received. If the video game is a single-player video game without the possibility of spectating, then a client device input (e.g., a client device input 140) from a single client device (e.g., client device 120) is received as part of action 310A. If the video game is a multi-player video game or is a single-player video game with the possibility of spectating, then the client device inputs (e.g., the client device inputs 140 and 140A) from one or more client devices (e.g., the client devices 120 and 120A) may be received as part of action 310A.

By way of non-limiting example, the input from a given client device may convey that the user of the given client device wishes to cause a character under his or her control to move, jump, kick, turn, swing, pull, grab, etc. Alternatively or in addition, the input from the given client device may convey a menu selection made by the user of the given client device in order to change one or more audio, video or gameplay settings, to load/save a game or to create or join a network session. Alternatively or in addition, the input from the given client device may convey that the user of the given client device wishes to select a particular camera view (e.g., first-person or third-person) or reposition his or her viewpoint within the virtual world.

At action 320A, the game state may be updated based at least in part on the client device inputs received at action 310A and other parameters. Updating the game state may involve the following actions: Firstly, updating the game state may involve updating certain properties of the participants (player or spectator) associated with the client devices from which the client device input may have been received. These properties may be stored in the participant database 10. Examples of participant properties that may be maintained in the participant database 10 and updated at action 320A can include a camera view selection (e.g., first person or third person), a mode of play, a selected audio or video setting, a skill level, a customer grade (e.g., guest, premium, etc.).

Secondly, updating the game state may involve updating the attributes of certain objects in the virtual world based on an interpretation of the client device inputs. The objects whose attributes are to be updated may in some cases be represented by two- or three-dimensional models and may include playing characters, non-playing characters and other objects. In the case of a playing character, attributes that can be updated may include the object's position, strength, weapons/armor, lifetime left, special powers, speed/direction (velocity), animation, visual effects, energy, ammunition, etc. In the case of other objects (such as background, vegetation, buildings, vehicles, score board, etc.), attributes that can be updated may include the object's position, velocity, animation, damage/health, visual effects, textual content, etc.

It should be appreciated that parameters other than client device inputs may influence the above properties (of participants) and attributes (of virtual world objects). For example, various timers (such as elapsed time, time since a particular event, virtual time of day, total number of players, a participant's geographic location, etc.) can have an effect on various aspects of the game state.

Once the game state has been updated further to execution of action 320A, the main game process 300A may return to action 310A, whereupon new client device inputs received since the last pass through the main game process are gathered and processed.

### Graphics Control Process

A second process, referred to as the graphics control process, is now described with reference to Fig. 3B. Although shown as separate from the main game process 300A, the graphics control process 300B may be executed as an extension of the main game process 300A. The graphics control process 300B may be executed continually resulting in generation of the sets of rendering commands 204. In the case of a single-player video game without the possibility of spectating, there is only one player and therefore only one resulting set of rendering commands 204 to be generated. In the case of a multi-player video game, multiple distinct sets of rendering commands need to be generated for the multiple players, and therefore multiple sub-processes may be executed in parallel, one for each player. In the case of a single-player game with the possibility of spectating, there may again be only a single set of rendering commands 204, but the resulting video data stream may be duplicated for the spectators by the rendering engine 280. Of course, these are only examples of implementation and are not to be taken as limiting.

Consider operation of the graphics control process 300B for a given participant requiring one of the video data streams 205. At action 310B, the rendering command generator 270 may determine the objects to be rendered for the given participant. This action may include identifying the following types of objects:
Firstly, this action may include identifying those objects from the virtual world that are in the "game screen rendering range" (also known as a "scene") for the given participant. The game screen rendering range may include a portion of the virtual world that would be "visible" from the perspective of the given participant's camera. This may depend on the position and orientation of that camera relative to the objects in the virtual world. In a non-limiting example of implementation of action 310B, a frustum may be applied to the virtual world, and the objects within that frustum are retained or marked. The frustum has an apex which may be situated at the location of the given participant's camera and may have a directionality also defined by the directionality of that camera.
Secondly, this action can include identifying additional objects that do not appear in the virtual world, but which nevertheless may need to be rendered for the given participant. For example, these additional objects may include textual messages, graphical warnings and dashboard indicators, to name a few non-limiting possibilities.

At action 320B, the rendering command generator 270 may generate a set of commands for rendering into graphics (video data) the objects that were identified at action 310B. Rendering may refer to the transformation of 3-D or 2-D coordinates of an object or group of objects into data representative of a displayable image, in accordance with the viewing perspective and prevailing lighting conditions. This may be achieved using any number of different algorithms and techniques, for example as described in "Computer Graphics and Geometric Modelling: Implementation & Algorithms", Max K. Agoston, Springer-Verlag London Limited, 2005, hereby incorporated by reference herein. The rendering commands may have a format in conformance with a 3D application programming interface (API) such as, without limitation, "Direct3D" from Microsoft Corporation, Redmond, WA, and "OpenGL" managed by Khronos Group, Beaverton, OR.

At action 330B, the rendering commands generated at action 320B may be output to the rendering engine 280. This may involve packetizing the generated rendering commands into a set of rendering commands 204 that is sent to the rendering engine 280.

### VI. Generation of Graphics Output

The rendering engine 280 may interpret the sets of rendering commands 204 and produces multiple video data streams 205, one for each participating client device. Rendering may be achieved by the GPUs 240R, 250R, 240H, 250H under control of the CPUs 220R, 222R (in Fig. 2A) or 220H, 222H (in Fig. 2B). The rate at which frames of video data are produced for a participating client device may be referred to as the frame rate.

In an embodiment where there are N participants, there may be N sets of rendering commands 204 (one for each participant) and also N video data streams 205 (one for each participant). In that case, rendering functionality is not shared among the participants. However, the N video data streams 205 may also be created from M sets of rendering commands 204 (where M<N), such that fewer sets of rendering commands need to be processed by the rendering engine 280. In that case, the rendering functional unit 280 may perform sharing or duplication in order to generate a larger number of video data streams 205 from a smaller number of sets of rendering commands 204. Such sharing or duplication may be prevalent when multiple participants (e.g., spectators) desire to view the same camera perspective. Thus, the rendering engine 280 may perform functions such as duplicating a created video data stream for one or more spectators.

Next, the video data in each of the video data streams 205 may be encoded by the video encoder 285, resulting in a sequence of encoded video data associated with each client device, referred to as a graphics output stream. In the example embodiments of Figs. 2A-2C, the sequence of encoded video data destined for a client device 120 is referred to as a "graphics output stream 206", while the sequence of encoded video data destined for a client device 120A is referred to as a "graphics output stream 206A".

The video encoder 285 may be a device (or set of computer-readable instructions) that enables or carries out or defines a video compression or decompression algorithm for digital video. Video compression may transform an original stream of digital image data (expressed in terms of pixel locations, color values, etc.) into an output stream of digital image data that conveys substantially the same information but using fewer bits. Any suitable compression algorithm may be used. In addition to data compression, the encoding process used to encode a particular frame of video data may or may not involve cryptographic encryption.

The graphics output streams 206, 206A created in the above manner may be sent over the Internet 130 to the respective client devices. By way of non-limiting example, the graphics output streams may be segmented and formatted into packets, each having a header and a payload. The header of a packet containing video data for a given participant may include a network address of the client device associated with the given participant, while the payload may include the video data, in whole or in part. In a non-limiting embodiment, the identity and/or version of the compression algorithm used to encode certain video data may be encoded in the content of one or more packets that convey that video data. Other methods of transmitting the encoded video data may occur to those of skill in the art.

While the present description focuses on the rendering of video data representative of individual 2-D images, the present invention does not exclude the possibility of rendering video data representative of multiple 2-D images per frame to create a 3-D effect.

### VII. Game Screen Reproduction at Client Device

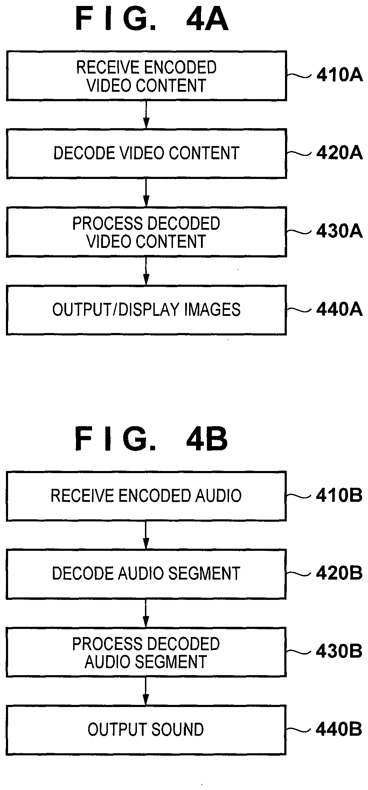

Reference is now made to Fig. 4A, which shows operation of a client-side video game application that may be executed by the client device associated with a given participant, which may be a client device 120 or a client device 120A, by way of non-limiting example. In operation, the client-side video game application may be executable directly by the client device or it may run within a web browser, to name a few non-limiting possibilities.

At action 410A, a graphics output stream (e.g., 206, 206A) may be received over the Internet 130 from the rendering server 200R (Fig. 2A) or from the hybrid server 200H (Fig. 2B), depending on the embodiment. The received graphics output stream may comprise encoded / compressed frames of video data which may be divided into frames. The received graphics output stream may be received by the client communication unit 904.

At action 420A, the encoded / compressed frames of video data may be decoded / decompressed in accordance with the decoding / decompression algorithm that is complementary to the encoding / compression algorithm used in the encoding / compression process. In a non-limiting embodiment, the identity or version of the encoding / compression algorithm used to encode / compress the video data may be known in advance. In other embodiments, the identity or version of the encoding / compression algorithm used to encode the video data may accompany the video data itself. Decoding / decompression may be performed by the client decoder 905.

At action 430A, the (decoded / decompressed) frames of video data may be processed. This can include placing the decoded / decompressed frames of video data in a buffer, performing error correction, reordering and/or combining the data in multiple successive frames, alpha blending, interpolating portions of missing data, and so on. The result may be video data representative of a final image to be presented to the user on a per-frame basis. Processing the frames of video may be executed by the client CPU 901, in a non-limiting embodiment.

At action 440A, the final image may be output via the output mechanism of the client device. For example, a composite video frame may be displayed on the display of the client device, such as the client display 906.

### VIII. Audio Generation

A third process, referred to as the audio generation process, is now described with reference to Fig. 3C. The audio generation process may execute continually for each participant requiring a distinct audio stream. In one embodiment, the audio generation process may be executed independently of the graphics control process 300B. In another embodiment, execution of the audio generation process and the graphics control process may be coordinated.

At action 310C, the rendering command generator 270 may determine the sounds to be produced. Specifically, this action may include identifying those sounds associated with objects in the virtual world that dominate the acoustic landscape, due to their volume (loudness) and/or proximity to the participant within the virtual world.

At action 320C, the rendering command generator 270 may generate an audio segment. The duration of the audio segment may span the duration of a video frame, although in some embodiments, audio segments may be generated less frequently than video frames, while in other embodiments, audio segments may be generated more frequently than video frames.

At action 330C, the audio segment may be encoded, e.g., by an audio encoder, resulting in an encoded audio segment. The audio encoder can be a device (or set of instructions) that enables or carries out or defines an audio compression or decompression algorithm. Audio compression may transform an original stream of digital audio (expressed as a sound wave changing in amplitude and phase over time) into an output stream of digital audio data that conveys substantially the same information but using fewer bits. Any suitable compression algorithm may be used. In addition to audio compression, the encoding process used to encode a particular audio segment may or may not apply cryptographic encryption.

It should be appreciated that in some embodiments, the audio segments may be generated by specialized hardware (e.g., a sound card) in either the compute server 200C (Fig. 2A) or the hybrid server 200H (Fig. 2B). In an alternative embodiment that may be applicable to the distributed arrangement of Fig. 2A, the audio segment may be parameterized into speech parameters (e.g., LPC parameters) by the rendering command generator 270, and the speech parameters can be redistributed to the destination client device (e.g., client device 120 or client device 120A) by the rendering server 200R.

The encoded audio created in the above manner is sent over the Internet 130. By way of non-limiting example, the encoded audio input may be broken down and formatted into packets, each having a header and a payload. The header may carry an address of a client device associated with the participant for whom the audio generation process is being executed, while the payload may include the encoded audio. In a non-limiting embodiment, the identity and/or version of the compression algorithm used to encode a given audio segment may be encoded in the content of one or more packets that convey the given segment. Other methods of transmitting the encoded audio may occur to those of skill in the art.

Reference is now made to Fig. 4B, which shows operation of the client device associated with a given participant, which may be client device 120 or client device 120A, by way of non-limiting example.

At action 410B, an encoded audio segment may be received from the compute server 200C, the rendering server 200R or the hybrid server 200H (depending on the embodiment). At action 420B, the encoded audio may be decoded in accordance with the decompression algorithm that is complementary to the compression algorithm used in the encoding process. In a non-limiting embodiment, the identity or version of the compression algorithm used to encode the audio segment may be specified in the content of one or more packets that convey the audio segment.

**At** action 430B, the (decoded) audio segments may be processed. This may include placing the decoded audio segments in a buffer, performing error correction, combining multiple successive waveforms, and so on. The result may be a final sound to be presented to the user on a per-frame basis.

At action 440B, the final generated sound may be output via the output mechanism of the client device. For example, the sound may be played through a sound card or loudspeaker of the client device.

### IX. Specific Description of Non-Limiting Embodiments

A more detailed description of certain non-limiting embodiments of the present invention is now provided.

Embodiments of the present invention provide an automated testing system for testing a system which receives inputs from one or more client devices (client device inputs) and renders one or more images (graphics output streams) according to the received inputs. For example, the system to be tested is a system for a video game, 3-dimensional CAD, image editor or the like.

In the following embodiments, a case where the system to be tested is a cloud gaming server system and includes the rendering command generator 270 and the rendering unit (renderer) 280 as shown in Fig. 2C will be described. In such a case, the automated testing system provides test input set including one or more inputs to the system and obtains, as outputs of the system, a rendering command set including one or more rendering commands from the rendering command generator 270 and/or an image set including one or more images rendered according to the rendering command set from the rendering unit 280. Here, it should be noted that the system can include other functional units and output signals other than the rendering command set or the image set.

**In** the present automated testing system, client device inputs received during a given period of time may be recorded and associated with the rendering command set generated during that period of time and/or with the image set rendered during that period of time. To this end, a two-phase approach may be used. These may be termed a "learning" phase and a "testing" phase, by way of non-limiting example.

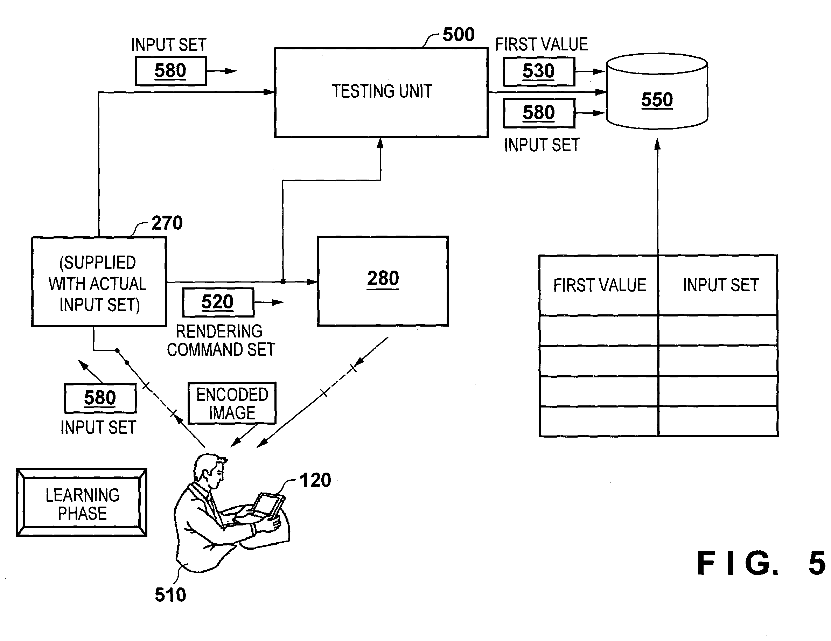

The learning phase is now described with reference to Fig. 5. A tester 510 is asked to play the video game using a client device 120. As the tester 510 interacts with the rendering command generator 270, the rendering command generator 270 generates a rendering command set including one or more rendering commands based on an input set including one or more client device inputs obtained through the interaction and outputs the rendering command set for each period of time corresponding to a video frame. The rendering command set output from the rendering command generator 270 is transferred to the rendering unit 280 and a testing unit 500. The rendering command generator 270 also transfers the input set obtained through the interaction to the testing unit 500. Here, certain portions of the testing unit 500 may be implemented using software and/or hardware components. The testing unit 500 can be part of or separate from the rendering command generator 270 and/or the rendering unit 280.

The testing unit 500 receives the rendering command set and produces a first value 530 that corresponds to the rendering command set and stores the first value 530 in a database 550. The testing unit 500 also stores the input set in association with the produced first value. An input set including one or more client device inputs that the rendering command generator 270 received during a given period of time may be associated with a rendering command set generated during the period of time. The length of the period of time may be an interval of a frame of video data. Here, the first value may be the rendering command set itself and be a value calculated based on the rendering command set (e.g., a hash value (code) described below).

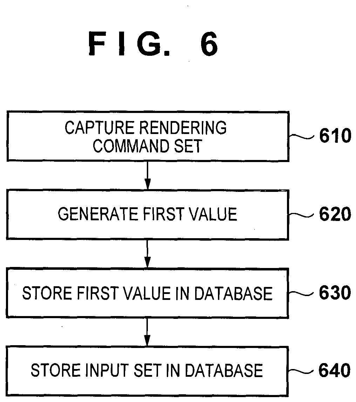

To explain further details of operation of the testing unit 500 during the learning phase, additional reference is now made to the flowchart in Fig. 6 (and with continued reference to Fig. 5). This flowchart describes actions taken during a given time period of the learning phase having a duration corresponding to a frame of video data (the "current learning time interval"). As such, the actions of the flowchart may be carried out repeatedly, once per frame, during the learning phase.

Step 610: A rendering command set 520 including one or more rendering commands output by the rendering command generator 270 is captured / recorded. The contents of the rendering command set 520 may be a set of instructions which, if processed by the rendering unit 280, would result in the generation of a frame of video data reproducible as visible images on a display device such as a screen.

It should be noted that, in this step 610, the testing unit 500 may capture/record an image set including one or more images output from the rendering unit 280 in addition to or instead of the rendering command set.

Step 620: The testing unit 500 obtains a first value 530 for the current learning time interval, based on the rendering command set 520 that was captured at step 610. It should be noted that although a case where the first value is obtained based only on the rendering command set is described below, the first value may be obtained based on the captured/recorded image set, or based on both the image set and the rendering command captured/recorded in Step 610 in a case where the image set is captured/recorded instead of or in addition to the rendering command set, in Step 610.

In an embodiment, a hashing function / algorithm can be used to compress, scramble, encode or truncate the rendering command set 520 into a smaller number of bits, referred to as a hash code. Thus, the hash code may occupy less space in memory than the rendering command set 520 in its entirety. Depending on the design of the hashing function, the resulting hash code may be substantially unique to each rendering command set 520. However, it is possible that some rendering command sets map to the same hash code, in which case a counter or time information related to a frame number of the current learning time interval or any other time indication could be added in order to disambiguate between seemingly identical hash codes. In addition, a hash code may be calculated based on a rendering command set and time information related to, for example, the current learning time interval or a time at which the rendering command set was captured in Step 610 or the input set was obtained in Step 640 described below.

Thus, while in some embodiments the first value 530 could include just the hash code, in other embodiments, the first value 530 could be composed of the hash code and additional information such as the aforementioned counter. In addition, as described above, the first value could be a rendering command set itself.

Of course, if an image set is captured in Step 610, the first value may be a hash value calculated based on the image set or both the image set and the rendering command set. The hash value may be formed in view of time information related to, for example, a frame number of the current learning time interval or a time at which the image set was captured in Step 610 or the input set was obtained in Step 640 described below. The first value may be the image set itself or a value representing the image set (e.g., pixel values or the like). In addition, if an image set is captured in addition to the rendering command set, another value differing from the first value may be obtained based only on the image set. In such a case, the first value, the other value and the input set may be stored in association with each other.

Step 630: The first value 530 is stored in the database 550. To this end, a record for the current learning time interval may be created in the database 550 and the first value 530 may be stored in a field of this record.

Step 640: In addition, during the current learning time interval, a received input set 580 is also captured and recorded in the database 550. The received input set 580 is stored in association with the first value 530. For example, the record for the current learning time interval may be comprised of the first value 530 and the recorded input set 580, thus registering an association between the first value 530 and the received input set 580 (as well as time information indicative of the current learning time interval or any other time indication, if necessary). It should be noted that a time at which Step 640 is executed may not be after the execution of Steps 610-630. For example, Step 640 may be executed at the same time as or prior to the Step 610 is executed.

It is recalled that receipt of the input set 580 occurs generally at step 310A of the main game process executed by the rendering command generator 270, as previously described with reference to Fig. 3A. This input set may then be forwarded to the testing unit 500 so that it may be recorded and processed. Alternatively, the testing unit 500 may be integrated within the rendering command generator 270. Examples of the input set 580 that could be recorded include a signal indicating that a particular button of an input device has been pressed/activated (with a particular amount of pressure and/or in a particular direction etc.), that a certain gesture has been made, that a certain key or region has been touched/selected, and the like.

It should be appreciated that if there is no client device input received during the current learning time interval, then there will be nothing stored in the corresponding record in association with the first value 530. In this case, only a first value may be stored for the current learning time interval.

The learning phase continues as long as the tester 510 plays the game. During this time, the database 550 becomes increasingly populated. Specifically, each subsequent time period of the learning phase having a duration corresponding to a frame of video data will result in the creation of a new record containing a first value and, in some cases, an input set. It will thus be noted that the database 550 links, on the one hand, first values corresponding to individual rendering command sets (or to individual image sets) with, on the other hand, the input sets received around the time when those rendering command sets (or the image sets) were captured. Accordingly, the input set may not affect the associated rendering command set and/or the associated image set, but a rendering command set and/or an image set output after the associated rendering command set and/or the associated image set.

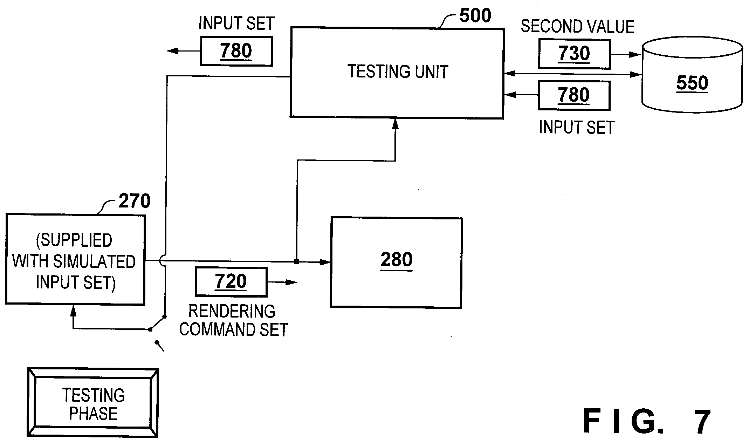

The testing phase is now described with reference to Fig. 7. In the testing phase, the rendering command generator 270 and/or the rendering unit 280 is tested by executing the same video game, and a second value may be obtained in the same way as the first value, which has been described above in the context of the learning phase. However, during the testing phase, there is no actual client device input (previously denoted as an input set 580 in Fig. 5). Rather, the testing unit 500 provides a simulated input set 700 including one or more inputs to the rendering command generator 270, the rendering command generator 270 generates a rendering command set 720 including one or more rendering commands according to the simulated input set 700, the rendering unit 280 outputs an image set (not shown) including one or more images, and the testing unit obtains the second value based on the rendering command set 720 and/or the image set. In the testing phase, the testing unit 500 also determines whether the obtained second value matches one of the first values recorded in the learning phase, and explicitly or implicitly outputs a result of the determination.

For example, in a case where the second value matches one of the recorded first values, the testing unit 500 may provide an input set recorded in association with the one of the recorded first values matching the second value. The input set was input to the rendering command generator 270 around the time when a rendering command set (or an image set) corresponding to the one of the stored first values matching the second value was captured, in the learning phase. Therefore, by providing the input set to the rendering command generator 270, the rendering command generator 270 can produce a next rendering command set, and then the testing unit 500 can obtain another second value corresponding to the next rendering command set and/or a next image set rendered according to the next rendering command. Accordingly, the result of the determination may be implicitly indicated by the testing being continued. When the testing is successfully completed, that is, when each of the obtained second values for all frames matches one of the first values, the testing unit 500 may indicate successful completion of the testing (and thereby explicitly outputting the result of the determination) or return to a state of accepting re-testing without any indication (and thereby implicitly outputting the result of the determination). The testing may be repeatedly performed in predetermined times. In this case, the testing unit 500 may implicitly or explicitly output the result of the testing in a case where all repeated testing is completed
On the other hand, the testing unit 500 may stop the testing when the second value does not match any of the stored first values and maintain a state of the game when the second value does not match any stored first value. In this case, the maintenance of the state of the game when no match occurs may implicitly indicate that the second value does not match any of the stored first values, as the result of the determination. An error message may be output for explicitly outputting the result of the determination if the second value does not match any of the stored first values. In addition, the testing unit 500 may monitor a state of the rendering command generator 270 and/or the rendering unit 280, such as a CPU usage rate, load amount, a memory usage rate, or the like, and output such a state of the rendering command generator 270 and/or the rendering unit 280 in a case where the second value does not match any of the stored first values.

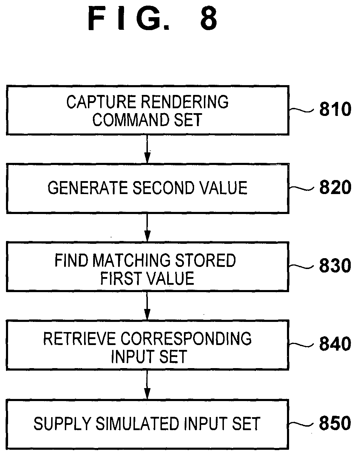

To explain further details of operation of the testing unit 500 during the testing phase, additional reference is now made to the flowchart in Fig. 8 (and with continued reference to Fig. 7). This flowchart describes actions taken during a given time period of the testing phase (the "current testing time interval") having a duration corresponding to the duration of a frame of video data. Of note is the fact that since the same video game is being re-run, each "testing time interval" (i.e., timeslice of the testing phase) has a corresponding "learning time interval" (i.e., timeslice of the learning phase) for which a first value had been obtained and for which a record exists in the database 550.

Step 810: A rendering command set 720 output by the rendering command generator 270 and/or an image set output by the rendering unit is captured / recorded. The contents of the rendering command set 720 may be a set of instructions which, if processed by the rendering unit 280, would result in the generation of a frame of video data reproducible as visible images on a display device such as a screen.

Step 820: The testing unit 500 obtains a second value 730 for the current testing time interval, based on the rendering command set 720 and/or the image set that was captured at step 810. If a hashing function / algorithm was used during the learning phase, then the same hashing algorithm would be used during the testing phase. The same applies to the counter or time information related to, for example, a frame number of the current testing time interval or any other time indication that may be used to disambiguate between identical hash codes. Similar to the first value, the second value may be a rendering command set 730 and/or an image set itself.

Step 830: The testing unit 500 compares the second value for the current testing time interval (i.e., obtained at Step 820) to the first values stored in the database 550 (which was populated during the learning phase) in order to check whether the second value matches (e.g., is identical or similar to) one of the stored first values and find a matching stored first value. In a situation where the video game is deterministic (repeatable), one can expect that the second value for the current testing time interval would indeed match one of the first values stored in the database 550.

Step 840: In a case where the second value matches one of the stored first values, the testing unit 500 retrieves, from the database 550, the input set 780 that had been stored in association with the one of the first values matching the second value. It will be appreciated that the input set 780 retrieved in this manner represents the input set that had been recorded in association during the learning time interval that corresponds to the current testing time interval.

In a case where the second value does not match any one of the stored first values, the testing unit 500 may explicitly or implicitly output the result indicating that the second value does not match any stored first value. For example, the testing unit 500 may stop the process while maintaining a state of a game or the testing. In this case, a person that causes the testing unit 500 to perform testing can understand that a situation in a game is not successfully reproduced by monitoring the state of the game or the testing. The testing unit 500 may output a message indicating that the second value does not match any stored first value, that is, that the reproduction of a situation in the game fails.

The testing unit 500 may output a result indicating that the rendering command generator 270 and/or the rendering unit 280 does not normally operate in a case where the second value does not match any one of the stored first values. In some embodiments, the testing unit 500 may comprise a state monitor for monitoring a state of the rendering command generator 270 and/or the rendering unit 280 and output the state of the rendering command generator 270 and/or the rendering unit 280 in a case where the second value does not match any of the stored first values. According to this aspect, the testing unit 500 can output the state of the rendering command generator 270 and/or the rendering unit 280, in which the reproduction of a situation in a game fails, in a case where the second value does not match any one of the stored first values. By outputting the state, it may become easy to debug the game.

Step 850: The testing unit 500 supplies the retrieved input set 780 to the rendering command generator 270 as if it had been received from an actual client device. This is referred to as "simulated" input set, because it is provided in lieu of the input set from an actual client device.

At this point, it is expected that the rendering command generator 270 and/or the rendering unit 280 will respond in the same way as they did during the learning phase. That is to say, it is expected that the response of the main game process 300A to the simulated input set (which is the input set 780 retrieved from the database 550) will be identical to its response to the input set 580 when the latter had been supplied by the client device 120 operated by tester 510. As such, the behavior of the main game process 300A is not dependent on whether the input set is actual input set or simulated input set. Moreover, the fact that the same response can be elicited from the main game process 300A without additional human intervention may improve consistency of the testing process and may reduce cost.

Thus, there is provided a testing unit (or "bot") for a video game. In a first phase, the bot stores first values corresponding to outputs of a system in association with inputs from the device used by an actual tester. A first value is obtained by intercepting a rendering command set for an image frame and/or an image set rendered according to a rendering command set. The first value may include a complete rendering command set including one or more rendering commands and/or an image set including one or more images for that frame or a hash code derived from the rendering command set and/or the image set, possibly together with additional information. In a second phase, the video game is re-run, and a second value is obtained in the same manner as a process for obtaining the first values. However, a second value obtained during the second phase is compared against the previously stored first values in an attempt to find a match. Where there is indeed a match, the corresponding input set is retrieved from memory and injected into the game to simulate player input. This second phase can be completely automated and requires no involvement of a human user, thus allowing more efficient and predictable testing of video games, particularly in a multi-player environment.

Variants of the above embodiments may be implemented under different circumstances.

For example, it will be noted that an exact match between the second value obtained at Step 820 and one of the previously stored first values is not always a requirement at Step 830. In fact, a partial match could be deemed a match. For example, if at least 80% or 90% of a content of the second value matches one of the first values, this could be sufficient to indicate a match. Reliance on a partial match is a particularly viable when a value (the first value or the second value) includes the entire rendering command set with which it is associated (i.e., there is no hashing function) or, when, even for a case where a hashing function is applied, the hashing function is designed such that similarities that may exist between two rendering command sets 520, 720 prior to hashing are preserved even when hashed. An example of a suitable hashing function in such an embodiment may be a truncation function, in a non-limiting embodiment.

It will also be noted that because a hash code may have fewer bits than the rendering command set from which it is derived (as a hashing function may be a many-to-one function), the possibility exists that the same hash code will be generated for two different rendering command sets. For example, consider the case where the same image persists for a period of two or more frames. The corresponding rendering command sets would be identical, leading to the same first values over two or more time intervals during the learning phase. When the testing phase is executed, a given second value may therefore correspond to multiple identical first values in the database 550, which has the potential for ambiguity. To resolve this ambiguity, a generated hash code can be associated with a counter, which indicates the number of times that the same hash code has already been computed or another counter or time information that indicates a frame number of the current time interval. The hash code counter can be appended to the remainder of the hash code to create the first or second values. Instead of a counter, another value, such as a random number, could be appended to the hash code when forming the signature. In this case, the random number is generated using the same random number generator with the same seed value in both the learning and testing phases.

It will also be noted that Step 830 includes the testing unit 500 comparing the second value generated at Step 820 to each of the first values that was stored in the database 550 during the learning phase, with the aim of identifying a matching previously stored first value. This may result in a large number of searches being performed. In order to reduce the number of searches, the searching effort can be focused on those first values that were stored subsequent to one of the first values for which a match had previously been identified. In other words, older first values are not searched because the past will not be reproduced. In this case, the testing unit 500 may store time information related to a time, at which an input set or a rendering command set and/or an image set was stored, or to a frame number corresponding to the image set in the database 500, in association with the input set and the rendering command set. In the testing phase, the testing unit 500 acquires, for example, a frame number for which the second value is obtained, and compares the second value with one or more of the first values, each of which has the corresponding frame number larger than the acquired frame number.

It will also be noted that it may be the case that, among the thousands or millions of frames that may span the duration of a game, only a small fraction might be associated with actual input sets 580. This would mean that a relatively small number of entries in the database 550 correspond to time intervals for which an input set 580 has actually been recorded. In that case, a further checking step could be provided, which would consist of monitoring the progression of the time intervals during the testing phase and waiting until the current testing time interval approaches to within a certain number of timeslices of the next time interval for which an input set 580 has been recorded. To this end, an approximate time stamp could be utilized, in order to give the testing unit 500 a general idea as to where it is in the overall process (e.g., a tolerance of, say, on the order of one second before the time interval where an input set 580 was recorded). When the current testing time interval is within this "tolerance", the testing unit 500 "wakes up" and executes steps 810 to 850 as described above.

Although it is described in the above embodiments that each of the first and the second values corresponds to a rendering command set and/or an image set, it may be configured such that each of the first and the second values corresponds only to a rendering command set and other values corresponding only to an image set are used in conjunction with the first and second values. For example, the testing unit 500 stores the first values corresponding only to a rendering command set and third values corresponding only to an image set rendered according to the rendering command set in the database 550 in the learning phase, and obtains the second values corresponding only to a rendering command set and a fourth value corresponding only to an image set rendered according to the rendering command set.

In this case, in a case where the fourth value does not match any one of the third values while the second value matches one of the first values, the testing unit 500 may output a result indicating that the rendering command generator 270 normally operates but the rendering unit 280 does not normally operate. This is because it can be determined that since output of the rendering command generator 270 in the testing phase matches the output of that in the learning phase, the rendering command generator 270 could reproduce the same rendering command set in the testing phase as that in the learning phase, and that since output of the rendering unit 280 in the testing phase does not match the output of that in the learning phase, the rendering unit 280 could not reproduce the same image set in the testing phase as that in the learning phase. Similarly, the testing unit 500 may output a result indicating that the rendering command generator 270 does not normally operate in a case where the second value does not match any one of the first values. Thus, according to such an aspect, the abnormally-operating part of the system can be easily discriminated.

In addition, although it is described in the above embodiments that an input set is stored in association with a rendering command set and/or an image set that is output during a predetermined period including a time at which the testing unit 500 or the rendering command generator 270 receives the input set, the input set can be stored in association with other information. For example, the input set may be stored in association with an image that is displayed at the client device in a predetermined period including at which a client device input included in the input set is input at the client device. That is, an image, which was displayed at a client device around the time when a client device input included in an input set was input at the client device, may be associated with the input set.

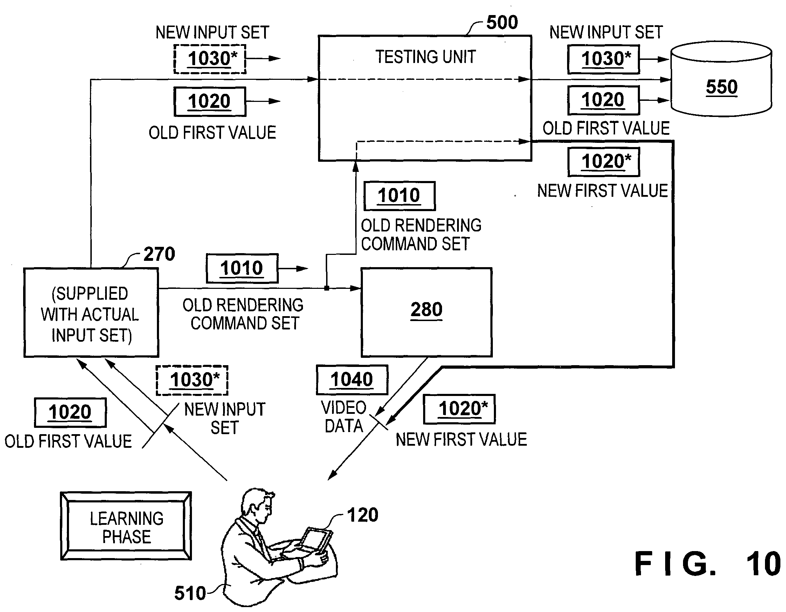

With reference to Fig. 10, the operation of the testing unit 500 will be described. In Fig. 10, the testing unit 500 generates first values for each of rendering command sets during the learning phase, but they are not recorded upon generation. Rather, the first value (new first value 1020*) derived from a rendering command set (old rendering command set 1010) for a given frame of video data is first sent to the client alongside the video data 1040 for that frame.

Meanwhile, the client device 120 can be instructed to return previously received first values (old first value 1020) back to the receiver (e.g., together with client device input 1030*, if any). The old first value 1020 received in this fashion is recorded in the database 550 alongside any accompanying new client device input 1030* from the client device 120. The old first value and an input set including the new client device input 1030* (if any) are provided to the testing unit 500, which stores them in a database entry.

Thus, in summary, during the learning phase, records in the database 550 will be populated with first values received from the client device (e.g., old first values 1020 that derived from an earlier rendering command set 1010 and previously sent to the client device 120), together with an input set including any client device input 1030* that might have accompanied the old first value 1020 on a return trip from the client device 102. This creates a direct association in the database 550 between first values and input sets including client device input.

During the testing phase, the simulated input set is provided to the rendering command generator 270. Second values are derived from rendering command set and, as soon as a particular second value is recognized, the associated input set (if any) can be retrieved from the database 550 and applied as a simulated input set, thus emulating the input set that had originally accompanied the first value on its way back from the client device 120 during the learning phase.

Persons skilled in the art should appreciate that the above-discussed embodiments are to be considered illustrative and not restrictive. Also it should be appreciated that additional elements that may be needed for operation of certain embodiments of the present invention may not have been described or illustrated, as they are assumed to be within the purview of the person of ordinary skill in the art. Moreover, certain embodiments of the present invention may be free of, may lack and/or may function without any element that is not specifically disclosed herein.

Those skilled in the art will also appreciate that additional adaptations and modifications of the described embodiments can be made. The scope of the invention, therefore, is not to be limited by the above description of specific embodiments but rather is defined by the claims attached hereto.

### Other Embodiments

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. Also, the information processing apparatus and the method of controlling an information processing apparatus according to the present invention are realizable by a program executing the methods on a computer. The program is providable/distributable by being stored on a computer-readable storage medium or through an electronic communication line.

## Claims

1. A testing unit (500) implemented using software and/or hardware components,
the testing unit (500) being configured to store, in storage means (550),
a plurality of input sets (580), each of which includes one or more client device inputs, and
a plurality of first result values (530), each of which was obtained by an image rendering process using one of the plurality of input sets (580), wherein each one of the plurality of first result values (530) is associated with one of the plurality of input sets (580) that was input to the image rendering process at a time when the one of the plurality of first result values (530) was obtained; wherein the testing unit (500) comprises:
retrieving means configured to retrieve an input set (780) out of the plurality of input sets (580) from the storage means (550);
providing means configured to provide a system for image rendering (270, 280) with the retrieved input set (780) ;
obtaining means configured to obtain, from the system (270, 280), a second result value (730) by the image rendering process performed by the system (270, 280) using the retrieved input set (780);
checking means configured to check each of the plurality of first result values to determine whether the second result value (730) matches one of the plurality of first result values (530) stored in the storage means (550), wherein no match indicates that the second result value (730) does not match any of the stored first result values (530); and
outputting means configured to output a result indicating that the image rendering process is abnormally stopped in a case where the second result value (730) does not match any of the plurality of first result values (530);
wherein the retrieving means is further configured to retrieve, in a case where the second result value (730) matches one of the plurality of first result values (530), one of the plurality of input sets (580) associated with the matched one of the plurality of first result values (530), and the providing means is further configured to provide the system (270, 280) with the retrieved one of the plurality of input sets (580).

2. The testing unit according to claim 1, wherein the image rendering process includes a process for generating one or more rendering commands for rendering one or more images.

3. The testing unit according to claim 2, wherein the first and second result values (530, 730) are rendering commands.

4. The testing unit according to claim 2, wherein each of the first and second result values (530, 730) is a hash value calculated from the rendering commands.

5. The testing unit according to claim 2, wherein the image rendering process further includes a process for rendering one or more images according to the one or more rendering commands.

6. The testing unit according to claim 5, wherein the first and second result values (530, 730) are the images rendered in the process for rendering one or more images.

7. The testing unit according to claim 1, wherein the first result value (530) is a hash value calculated based on time information related to a time at which the one of the plurality of input sets (580) associated with the first result value (530) was provided to the image rendering process.

8. The testing unit according to claim 1, wherein the storage means (550) is configured to store time information related to a time, at which one of the plurality of input sets (580) and one of the plurality of first result values (530) corresponding to the one of the plurality of input sets (580) was stored, in association with the one of the plurality of input sets (580) and the corresponding one of the plurality of first result values (530) .

9. The testing unit according to claim 1, wherein the storage means (550) is configured to store one or more of the plurality of first result values (530), not in association with any one of the plurality of input sets (580) in a case where the one or more of the plurality of first result values (530) were output during a predetermined period while no input set (580) was provided to the image rendering process.

10. The testing unit according to claim 1, wherein the checking means is configured to determine that the second result value (730) matches one of the plurality of first result values (530) in a case where the second result value (730) is identical to the one of the plurality of first result values (530).

11. The testing unit according to claim 1, wherein the checking means is configured to determine that the second result value (730) matches one of the plurality of first result values (530) in a case where a difference between the second result value (730) and the one of the plurality of first result values (530) is equal to or less than a predetermined threshold.

## Patentansprüche

1. Testeinheit (500), die unter Verwendung von Software- und/oder Hardwarekomponenten implementiert ist,
wobei die Testeinheit (500) dafür konfiguriert ist, in einem Speichermittel (550) Folgendes zu speichern:
eine Vielzahl von Eingabesätzen (580), von denen jeder einen oder mehrere Client-Vorrichtungseingänge umfasst, und
eine Vielzahl von ersten Ergebniswerten (530), von denen jeder durch einen Bildrenderingprozess unter Verwendung eines der mehreren Eingabesätze (580) erhalten wurde; wobei jeder der Vielzahl von ersten Ergebniswerten (530) einem der Vielzahl von Eingabesätzen (580) zugeordnet ist, der zu einem Zeitpunkt in den Bildrenderingprozess eingegeben wurde, zu dem einer der Vielzahl von ersten Ergebniswerten (530) erhalten wurde;
wobei die Testeinheit (500) Folgendes umfasst:
ein Abrufmittel, das dafür konfiguriert ist, einen Eingabesatz (780) aus der Vielzahl von Eingabesätzen (580) von dem Speichermittel (550) abzurufen;
ein Bereitstellungsmittel, das dafür konfiguriert ist, ein System zum Rendern von Bildern (270, 280) mit dem abgerufenen Eingabesatz (780) bereitzustellen;
ein Erlangungsmittel, das dafür konfiguriert ist, vom System (270, 280) einen zweiten Ergebniswert (730) durch den vom System (270, 280) durchgeführten Bildrenderingprozess unter Verwendung des abgerufenen Eingabesatzes (780) zu erlangen;
ein Prüfmittel, das dafür konfiguriert ist, jeden der Vielzahl von ersten Ergebniswerten zu prüfen, um zu bestimmen, ob der zweite Ergebniswert (730) mit einem der Vielzahl von ersten Ergebniswerten (530) übereinstimmt, die in dem Speichermittel (550) gespeichert sind; wobei keine Übereinstimmung anzeigt, dass der zweite Ergebniswert (730) keinem der gespeicherten ersten Ergebniswerte (530) entspricht; und
ein Ausgabemittel, das dafür konfiguriert ist, ein Ergebnis auszugeben, das anzeigt, dass der Bildrenderingprozess in einem Fall abnormal gestoppt wird, in dem der zweite Ergebniswert (730) keinem der Vielzahl von ersten Ergebniswerten (530) entspricht;
wobei das Abrufmittel ferner dafür konfiguriert ist, in einem Fall, in dem der zweite Ergebniswert (730) mit einem der Vielzahl von ersten Ergebniswerten (530) übereinstimmt, einen der Vielzahl von Eingabesätzen (580) abzurufen, die dem übereinstimmenden der Vielzahl der ersten Ergebniswerte (530) zugeordnet sind, und das Bereitstellungsmittel ferner dafür konfiguriert ist, das System (270, 280) mit dem abgerufenen der Vielzahl von Eingabesätzen (580) zu versorgen.

2. Testeinheit nach Anspruch 1, wobei der Bildrenderingprozess einen Prozess zum Erzeugen eines oder mehrerer Renderbefehle zum Rendern eines oder mehrerer Bilder umfasst.

3. Testeinheit nach Anspruch 2, wobei der erste und der zweite Ergebniswert (530, 730) Befehle rendern.

4. Testeinheit nach Anspruch 2, wobei jeder der ersten und zweiten Ergebniswerte (530, 730) ein aus den Rendering-Befehlen berechneter Hash-Wert ist.

5. Testeinheit nach Anspruch 2, wobei der Bildrenderingprozess ferner einen Prozess zum Rendern eines oder mehrerer Bilder gemäß dem einen oder den mehreren Renderbefehlen umfasst.

6. Testeinheit nach Anspruch 5, wobei der erste und der zweite Ergebniswert (530, 730) die Bilder sind, die in dem Verfahren zum Rendern eines oder mehrerer Bilder gerendert werden.

7. Testeinheit nach Anspruch 1, wobei der erste Ergebniswert (530) ein Hashwert ist, der basierend auf Zeitinformationen berechnet wird, die sich auf einen Zeitpunkt beziehen, zu dem derjenige der Vielzahl von Eingabesätzen (580), der dem ersten Ergebniswert (530) zugeordnet ist, für den Bildrenderingprozess bereitgestellt wurde.

8. Testeinheit nach Anspruch 1, wobei das Speichermittel (550) dafür konfiguriert ist, Zeitinformationen zu speichern, die sich auf einen Zeitpunkt beziehen, zu dem einer der Vielzahl von Eingabesätzen (580) und einer der Vielzahl von ersten Ergebniswerten (530), die dem einen der Vielzahl von Eingabesätzen (580) entsprechen, in Verbindung mit dem einen der Vielzahl von Eingabesätzen (580) und dem entsprechenden einen der Vielzahl von ersten Ergebniswerten (530) gespeichert wurde.

9. Testeinheit nach Anspruch 1, wobei das Speichermittel (550) dafür konfiguriert ist, einen oder mehrere der Vielzahl von ersten Ergebniswerten (530) zu speichern, die nicht in Verbindung mit einem der Vielzahl von Eingabesätzen (580) stehen, in einem Fall, in dem der eine oder die mehreren der Vielzahl von ersten Ergebniswerten (530) während eines vorbestimmten Zeitraums ausgegeben wurden, während für den Bildrenderingprozess kein Eingabesatz (580) bereitgestellt wurde.

10. Testeinheit nach Anspruch 1, wobei das Prüfmittel dafür konfiguriert ist, zu bestimmen, dass der zweite Ergebniswert (730) mit einem der Vielzahl von ersten Ergebniswerten (530) in einem Fall übereinstimmt, in dem der zweite Ergebniswert (730) mit dem einen der Vielzahl von ersten Ergebniswerten (530) identisch ist.

11. Testeinheit nach Anspruch 1, wobei das Prüfmittel dafür konfiguriert ist, zu bestimmen, dass der zweite Ergebniswert (730) mit einem der Vielzahl von ersten Ergebniswerten (530) in einem Fall übereinstimmt, in dem eine Differenz zwischen dem zweiten Ergebniswert (730) und dem einen der Vielzahl von ersten Ergebniswerten (530) gleich oder kleiner als ein vorbestimmter Schwellenwert ist.

## Revendications

1. Unité d'essai (500) mise en œuvre en utilisant des logiciels et/ou des composants de matériel,
l'unité d'essai (500) étant configurée pour stocker, dans un moyen de stockage (550),
une pluralité d'ensembles d'entrées (580), dont chacun comprend des entrées d'un ou de plusieurs dispositifs clients, et
une pluralité de premières valeurs de résultat (530), dont chacune a été obtenue par un processus de rendu d'image en utilisant l'un de la pluralité d'ensembles d'entrées (580), dans laquelle chacune de la pluralité de premières valeurs de résultat (530) est associée à l'un de la pluralité d'ensembles d'entrées (580) qui a été entré dans le processus de rendu d'image à un instant quand ladite l'une de la pluralité de premières valeurs de résultat (530) a été obtenue ;
dans laquelle l'unité d'essai (500) comporte :
un moyen de récupération configuré pour récupérer un ensemble d'entrées (780) parmi la pluralité d'ensembles d'entrées (580) en provenance du moyen de stockage (550) ;
un moyen de fourniture configuré pour fournir à un système à des fins de rendu d'image (270, 280) l'ensemble d'entrées récupéré (780) ;
un moyen d'obtention configuré pour obtenir, en provenance du système (270, 280), une deuxième valeur de résultat (730) par le processus de rendu d'image effectué par le système (270, 280) en utilisant l'ensemble d'entrées récupéré (780) ;
un moyen de contrôle configuré pour contrôler chacune de la pluralité de premières valeurs de résultat pour déterminer si la deuxième valeur de résultat (730) correspond à l'une de la pluralité de premières valeurs de résultat (530) stockées dans le moyen de stockage (550), dans laquelle une absence de correspondance indique que la deuxième valeur de résultat (730) ne correspond à aucune des premières valeurs de résultat stockées (530) ; et
un moyen d'émission en sortie configuré pour émettre en sortie un résultat indiquant que le processus de rendu d'image est anormalement arrêté dans un cas de figure où la deuxième valeur de résultat (730) ne correspond à aucune de la pluralité de premières valeurs de résultat (530) ;
dans laquelle le moyen de récupération est par ailleurs configuré pour récupérer, dans un cas de figure où la deuxième valeur de résultat (730) correspond à l'une de la pluralité de premières valeurs de résultat (530), l'un de la pluralité d'ensembles d'entrées (580) associé à ladite l'une correspondante de la pluralité de premières valeurs de résultat (530), et le moyen de fourniture est par ailleurs configuré pour fournir au système (270, 280) ledit un ensemble récupéré de la pluralité d'ensembles d'entrées (580).

2. Unité d'essai selon la revendication 1, dans laquelle le processus de rendu d'image comprend un processus servant à générer une ou plusieurs commandes de rendu à des fins de rendu d'une ou de plusieurs images.

3. Unité d'essai selon la revendication 2, dans laquelle les premières et deuxième valeurs de résultat (530, 730) sont des commandes de rendu.

4. Unité d'essai selon la revendication 2, dans laquelle chacune des premières et deuxième valeurs de résultat (530, 730) est une valeur de hachage calculée à partir des commandes de rendu.

5. Unité d'essai selon la revendication 2, dans laquelle le processus de rendu d'image comprend par ailleurs un processus servant à des fins de rendu d'une ou de plusieurs images en fonction desdites une ou plusieurs commandes de rendu.

6. Unité d'essai selon la revendication 5, dans laquelle les premières et deuxième valeurs de résultat (530, 730) sont les images rendues dans le processus servant à des fins de rendu d'une ou de plusieurs images.

7. Unité d'essai selon la revendication 1, dans laquelle la première valeur de résultat (530) est une valeur de hachage calculée en se basant sur des informations temporelles se rapportant à un instant auquel ledit l'un de la pluralité d'ensembles d'entrées (580) associé à la première valeur de résultat (530) a été fourni au processus de rendu d'image.

8. Unité d'essai selon la revendication 1, dans laquelle le moyen de stockage (550) est configuré pour stocker des informations temporelles se rapportant à un instant auquel l'un de la pluralité d'ensembles d'entrées (580) et l'une de la pluralité de premières valeurs de résultat (530) correspondant audit l'un de la pluralité d'ensembles d'entrées (580) ont été stockés, en association avec ledit l'un de la pluralité d'ensembles d'entrées (580) et ladite l'une correspondante de la pluralité de premières valeurs de résultat (530).

9. Unité d'essai selon la revendication 1, dans laquelle le moyen de stockage (550) est configuré pour stocker une ou plusieurs de la pluralité de premières valeurs de résultat (530), sans association à aucun de la pluralité d'ensembles d'entrées (580) dans un cas de figure où lesdites une ou plusieurs de la pluralité de premières valeurs de résultat (530) ont été émises en sortie au cours d'une période prédéterminée alors qu'aucun ensemble d'entrées (580) n'a été fourni au processus de rendu d'image.

10. Unité d'essai selon la revendication 1, dans laquelle le moyen de contrôle est configuré pour déterminer que la deuxième valeur de résultat (730) correspond à l'une de la pluralité de premières valeurs de résultat (530) dans un cas de figure où la deuxième valeur de résultat (730) est identique à ladite l'une de la pluralité de premières valeurs de résultat (530).

11. Unité d'essai selon la revendication 1, dans laquelle le moyen de contrôle est configuré pour déterminer que la deuxième valeur de résultat (730) correspond à l'une de la pluralité de premières valeurs de résultat (530) dans un cas de figure où une différence entre la deuxième valeur de résultat (730) et ladite l'une de la pluralité de premières valeurs de résultat (530) est égale ou inférieure à un seuil prédéterminé.
